# EUROPÄISCHE PATENTSCHRIFT

(11) **EP 1 670 129 B1**
(45) Veröffentlichungstag und Bekanntmachung des Hinweises auf die Patenterteilung: **29.10.2008**
(21) Anmeldenummer: 05019272.3
(22) Anmeldetag: 06.09.2005
(51) Int. Cl.: H02M 3/158

(54) **Spannungswandler**
Voltage converter
Convertisseur de tension

(30) Priorität: 07.09.2004 DE 102004043609
(43) Veröffentlichungstag der Anmeldung: 14.06.2006
(73) Patentinhaber: Kalfhaus, Reinhard, 63527 Mainhausen (DE)
(72) Erfinder: Kalfhaus, Reinhard, 63527 Mainhausen (DE)
(74) Vertreter: Stoffregen, Hans-Herbert

(56) Entgegenhaltungen:
- EP-A- 0 852 422
- DE-A1- 19 515 210
- US-A- 5 932 995
- US-B1- 6 181 079

## Beschreibung

Die Erfindung bezieht sich auf einen Spannungswandler nach dem Oberbegriff des Anspruchs 1.

Aus der US-A-5,932,995 ist die Schaltungsanordnung eines Dual-Buck-Konverters mit gekoppelten Drosselspulen bekannt. Dieser wird verwendet, um eine schwankende hohe Eingangsspannung ohne ein Grundpotential auf eine regulierte Ausgangsspannung zu reduzieren. Dazu ist vorgesehen, dass die Drosselspulen zweier unabhängiger Buck-Konverter gekoppelt werden. Die Eingangsspannung wird dabei über die Eingänge von zwei Buck-Konvertern angelegt, wobei das gemeinsame Potential durch Kopplung der Drosselspulen und gleichzeitiges Schalten der Schaltelemente symmetrisiert wird. Bei der bekannten Schaltungsanordnung handelt es sich um einen Tiefsetzsteller, dessen Ausgangsspannung stets niedriger ist als die Eingangsspannung.

Aus der DE-A-195 15 210 ist ein Schaltnetzteil zur Regeneration einer in einem Eingangskreis anliegenden mit Schwankungen behafteten Eingangsspannung in Form einer Sepic-Topologie bekannt. Bei der Schaltungsanordnung handelt es sich um einen Hoch-Tiefsetzsteller.

Die DE-A-2 111 222 bezieht sich auf eine Symmetrierschaltung für fremdgesteuerte Transistor-Gleichstromumrichter unter Verwendung eines Analog-Digital-Wandlers für die Impulsbreitensteuerung der Stelltransistoren. Dabei ist vorgesehen, dass von den in getrennten Primärwicklungen des Umrichter-Übertragers geführten Strömen mittels Stromwandler und einer gemeinsamen integrierten Schaltung eine Messspannung mit von der Symmetrie der Stromimpulse abhängiger Polarität gebildet wird. Mittels der Spannung wird die von einem Taktgeber über einen Messwert-Übertrager an den Analog-Digital-Wandler gelieferte Steuer-Rechteckwechselspannung am Ausgang des Messwert-Übertragers im Sinne einer Impulsbreitensteuerung beeinflusst. Dadurch wird eine Stromsymmetrierung verwirklicht.

Aus der DE-A-198 00 105 ist ein Strom-Spannungswandler, insbesondere für hohe Eingangsspannungen bekannt. Dieser umfasst eine Primärseite, die mehrere in Reihe geschaltete Teilsysteme mit jeweils zumindest einem Transistor-Leistungsschalter und jeweils einer eigenen zugeordneten Transformator-Primärwicklung aufweist, sowie eine Sekundärseite, über die die Teilsysteme an einen gemeinsamen Lastausgang angekoppelt sind. Dabei sind die Halbleiter der Primär- bzw. Eingangsstufe spannungsmäßig symmetrisch belastet, wobei die Halbleiter-Spannungsbelastung der Eingangsspannung geteilt durch die Anzahl der Teilsysteme plus der am Transformator primärseitig anliegenden Zwischenkreisspannung entspricht. Durch den Transformator wird eine gemeinsame Bündelung der Einzelstufenleistungen auf einen gemeinsamen Ausgang erreicht.

In der EP 0 852 422 A2 ist ein Tiefsetzsteller beschrieben, mit welchem das Auftreten einer unsymmetrischen HF-Ripplespannung an den Ausgangsklemmen gegen Erde verhindert wird. Danach werden zwei im Gleichtakt angesteuerte und sich jeweils in den Ausgangszweigen befindliche Halbleiterschalter und zwei Speicherdrosseln, oder eine Speicherdrossel mit zwei getrennten Wicklungen, potentialmäßig symmetrisch zu den Eingangsklemmen bzw. zu den Netzladekondensatoren eingesetzt. Allerdings ist diese Schaltung nicht für den Einsatz im kV-Hochspannungsbereich geeignet.

In der US 6,181,079 B1 wird eine elektronische Last für hohe Energien mit integrierten magnetischen Komponenten beschrieben, wobei als Eingangstopologie eine Sepic-Topologie eingesetzt wird. Auch hier ist eine Anwendung im kV-Hochspannungsbereich, insbesondere Bahnstromnetzen, nicht angesprochen.

Davon ausgehend liegt der vorliegenden Erfindung das Problem zu Grunde, einen Spannungswandler der eingangs genannten Art derart weiterzubilden, dass eine minimale Ausgangsspannung auch bei Absenken der Eingangsspannung unter den Wert der minimalen Ausgangsspannung garantiert ist und dass eine Leistungsbündelung mehrerer Stufen mit oder ohne Transformator möglich ist, um den Wirkungsgrad zu verbessern und Kosten zu senken.

Das Problem wird durch die kennzeichnenden Merkmale des Anspruchs 1 gelöst.

Durch die erfindungsgemäße Schaltungsanordnung wird erreicht, dass aus einer Eingangsspannung die im Bereich von beispielsweise 450 V unterer und 1500 V oberer Grenzwertspannung liegen kann und kleiner, gleich oder größer als eine zu erzeugende Ausgangs- bzw. Zwischenkreisspannung ist und diese derart zur Verfügung gestellt wird, dass diese in Summe mit der Eingangsspannung größer ist als die maximale Halbleiterspannung der verwendeten Halbleiterbauelemente (Transistoren/Dioden). Folglich können Halbleiter verwendet werden, deren Schaltverhalten wirkungsgradverbessernd und kostenoptimal sind. Die Schaltungsanordnung bietet ferner den Vorteil, dass die gemeinsame, gebündelte Ausgangsspannung doppelt so hoch ist wie die Zwischenkreisspannung und ohne Potentialtrennung zur Verfügung steht.

Der erfindungsgemäße Spannungswandler kann als "Doppel-Regenerator" bezeichnet werden, bestehend aus einem ersten Teilsystem, das eine bezogen auf ein Grundpotential positive Teilausgangsspannung aufweist und einem zweiten Teilsystem, das eine bezogen auf dieses Grundpotential negative Teilausgangsspannung erzeugt. Aus der Summe der einzelnen Teilausgangsspannungen setzt sich die Ausgangsspannung zusammen.

Um eine verbesserte Symmetrierung der einzelnen Wandlerstufen zu erreichen, ist gemäß einer bevorzugten Weiterbildung vorgesehen, dass die als Drosselspulen ausgebildeten Induktivitäten einen gemeinsamen Magnetkern aufweisen.

Da das als Grundpotential bezeichnete Bezugspotential ein statisches Potential ist, das stets der halben Eingangsspannung und der halben Ausgangsspannung entspricht, wird vorzugsweise eine den Spannungswandler steuernde/regelnde Steuer-Regelschaltung auf dieses Potential gelegt.

In bevorzugter Weise erfolgt die Strommessung jeweils in den die Querinduktivitäten aufweisenden Querzweigen durch eine Shunt-Messung oder einen Stromsensor in Form eines Stromwandlers, deren Einzelmesswerte zu einem Stromwert addiert werden können bzw. eine Unsymmetrie der Ströme erfasst werden kann.

Bezogen auf dieses Grundpotential wird mittels eines einfachen Differenz-Operationsverstärkers die Eingangsspannung zur Ableitung der tₒₙ-Zeit und gleichfalls über einen Differenz-Operatioasverstärker die Ausgangsspannung zur Ableitung der Istwert-Regelgröße herangezogen.

Die Iialbleiterschaltelemente in den Querzweigen haben bei zumindest einem Schaltelement eine Ansteuerung auf nicht definiertem Potential, weshalb eine Ansteuereinheit mit potentialfreier Ansteuerung und 0 - 360°-Ansteuerung verwendet wird.

Da das Bezugspotential auf Grundpotential, d. h. auf halber Eingangsspannung, liegt, wird der Vorteil verringerter Luft- und Kriechwege erreicht.

In bevorzugter Ausführungsform sind die Halbleiterschaltelemente als IGBT oder FET-Transistoren ausgebildet.

Weitere Einzelheiten, Vorteile und Merkmale der Erfindung ergeben sich nicht nur aus den Ansprüchen, den diesen zu entnehmenden Merkmalen ― für sich und/oder in Kombination -, sondern auch aus der nachfolgenden Beschreibung bevorzugter Ausführungsbeispiele.

Es zeigen:
- Fig. 1: eine erste Ausführungsform eines Doppel-Sepic-Wandlers und
- Fig.2: eine zweite Ausführungsform des Doppel-Sepic-Wandlers mit Potentialtrennung.

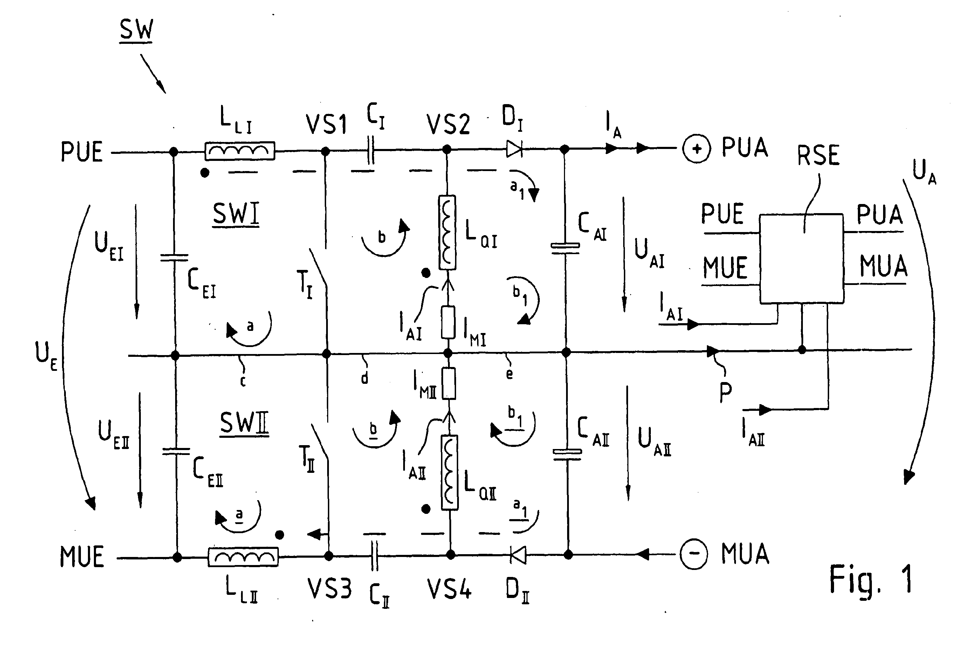

Figur 1 zeigt ein Prinzipschaltbild eines zweistufigen Spannungswandlers SW, der auch als Doppel-Regenerator bezeichnet werden kann. Der Spannungswandler SW besteht aus zumindest zwei Wandlerstufen SW I, SW II, die jeweils eine SEPIC- bzw. abgewandelte Topologie aufweisen. Dabei liegt an der ersten Wandlerstufe SW 1 eine Teilspannung U_{El} der Eingangsspannung U_{E} an, die bezogen auf ein gemeinsames Potential P (Grundpotential) eine positive Teilausgangsspannung U_{Al} am Ausgang der Wandlerstufe SW I erzeugt. Des Weiteren ist eine zweite Wandlerstufe SW II vorgesehen, die aus einer Teilspannung U_{EII} der Eingangsspannung U_{E} eine bezogen auf das gemeinsame Potential P negative Ausgangsspannung ―U_{AII} erzeugt, so dass bei einer ausgangsseitigen Verschaltung der Wandlerstufen SW I und SW II die Ausgangsspannung U_{A} als Summe der Teilausgangsspannungen U_{Al} und U_{AII} zur Verfügung steht.

Die erste Wandlerstufe SWI umfasst ausgehend von einer Eingangsklemme PUE einen Längszweig, der eine Induktivität L_{LI}, einen Kondensator C_{I} sowie eine Diode D₁ auf weist. Die Eingangsklemme PUE der ersten Wandlerstufe SWI ist mit einem Anschluss der Induktivität L_{LI} sowie einem ersten Pol eines Kondensators C_{EI} verbunden, dessen zweiter Pol mit dem gemeinsamen Potential P verbunden ist. An dem Kondensator C_{EI} liegt eine Teilspannung U_{EI} der Eingangsspannung U_{E} an. Eine Verbindungsstelle VS1 zwischen der Induktivität L_{LI} und dem Kondensator C₁ ist über ein Halbleiterschaltelement T₁ mit dem gemeinsamen Potential P verbunden. Eine Verbindungsstelle VS2 zwischen dem Kondensator C₁ und einer Anode der Diode D₁ liegt über eine Induktivität L_{QI} und über das Strommesselement IM_{I} an dem gemeinsamen Potential P. Eine Kathode der Diode D₁ ist mit einem positiven Ausgang PUA und einem positiven Pol eines Ausgangskondensators C_{AI} verbunden, dessen negativer Pol mit dem gemeinsamen Potential P verbunden ist. An dem Kondensator C_{AI} liegt eine Teilausgangsspannung U_{AI} der Ausgangsspannung U_{A} an.

Die zweite Wandlerstufe SWII umfasst ausgehend von einer Eingangsklemme MUE einen Längszweig, der eine Induktivität L_{LII}, einen Kondensator C_{II} sowie eine Diode D_{II} aufweist. Die Eingangsklemme MUE der zweiten Wandlerstufe SWII ist mit einem Anschluss der Induktivität L_{LII} sowie einem ersten Pol eines Kondensators C_{EII} verbunden, dessen zweiter Pol mit dem gemeinsamen Potential P verbunden ist. An dem Kondensator C_{EII} liegt eine Teilspannung U_{EII} der Eingangsspannung U_{E} an. Eine Verbindungsstelle VS3 zwischen der Induktivität L_{LII} und dem Kondensator C_{II} ist über ein Halbleiterschaltelement T_{II} mit dem gemeinsamen Potential P verbunden. Eine Verbindungsstelle VS4 zwischen dem Kondensator C_{II} und einer Kathode der Diode D_{II} liegt über eine Induktivität L_{QII} und über das Strommesselement IM_{II} an dem gemeinsamen Potential P. Eine Anode der Diode D_{II} ist mit einem negativen Ausgang MUA und einem negativen Pol eines Ausgangskondensators C_{AII} verbunden, dessen positiver Pol mit dem gemeinsamen Potential P verbunden ist. An dem Kondensator C_{AII}, liegt eine Teilausgangsspannung U_{AII} der Ausgangsspannung U_{A} an.

Der Spannungswandler SW für erhöhte Eingangsspannungen U_{E} ist überwiegend zum Betrieb von Elektroniksystemen (Drehrichter/Batterieladesystem/ Wechselrichter) an beispielsweise 600 - 750 VDC und 1000 V AC konzipiert, wobei als Eingangsspannung U_{E} eine Spannung im Grenzwert-Bereich von 400 ≤ U_{E} ≤1500 V zur Verfügung steht. Dies gilt für den heutigen Stand der Halbleitertechnologie, kann aber sicherlich auf alle anderen Nennspannungen bezogen werden.

Durch die oben beschriebene Topologie wird erreicht, dass aus der Eingangsspannung U_{E} die kleiner, gleich oder größer als eine zu erstellende Ausgangsspannung U_{A} bzw. Zwischenkreisspannung ist, eine Ausgangsspannung erzeugt wird, die in ihrer Summe mit der Eingangsspannung U_{E} zuzüglich einer Transiemenspannung U_{TRANS} größer ist als die Spannungsfestigkeit der Halbleiterbauelemente TI, TII, DI, DII der Einzelzweige.

Beim Betrieb des Spannungswandlers SW beispielsweise an einem Bahnstromnetz ist mit Transientenspannungen im Bereich von U_{TRANS} ≈ 2000 V zu rechnen. Bei aus dem Stand der Technik bekannten Schaltungstopologien müssten daher Halbleiterschaltelemente verwendet werden, die Spannungsfestigkeiten über 2000 V aufweisen. Im vorliegenden Fall liegt bei einer Eingangsspannung U_{E} im Bereich von 450 bis 1500 V und 660 V Ausgangsspannung an den Halbleiterschaltelementen TI bzw. TII bei symmetrischer Ansteuerung der Wandlerstufen SWI, SWII 750 V + 330 V, d. h. die Hälfte der Summe aus Eingangsspannung und Ausgangsspannung (1500 V + 660 V) : 2 = 1080 V an. Durch Abschalten der Leistungsstufe bei Beginn von Transienten können diese bei UE plus Transienten-Spannungen bis zur doppelten Einzelschaltelementspannung betragen. Dadurch wird erreicht, dass Halbleiterbauelemente eingesetzt werden können, die in ihrer Spannungsfestigkeit unterhalb des sich aus Eingangsspannung und Transientenspannung ergebenden Spannungswertes liegen. Diese Halbleiterelemente haben ein schnelleres Schaltverhalten, eine kleinere Baugröße und sind kostengünstiger.

Unter der Voraussetzung einer zeitsynchronen Ansteuerung (gleiche Spannungszeitfläche) der Halbleiterschalter TI und TII ist der das gemeinsame Potential P bildende Längszweig stromlos. Nur im Falle einer zeitsynchronen Ungleichheit bzw. zeitversetzten Ansteuerung der Zweigstromflüsse a, a, b, b in den Zweigen der Spannungswandlerstufen SWI, SWII fließen über die Zweige c, d, e Ströme. Im symmetrischen Fall sind auch die Zweigströme identisch, d.h. a = a, a1 = a1, b = b und b1 = b1.

Da die Halbleiterschaltelemente, insbesondere Halbleitertransistoren wie IGBT oder FET-Transistoren auf unterschiedlichen Bezugs-Potentialen liegen, hat eine Ansteuerung zumindest eines Transistors TI und TII mittels potentialfreier 0° - 360°-Ansteuerung zu erfolgen.

Die Strommessung in den Querinduktivitäten LQI, LQII erfolgt vorzugsweise mittels Shuntwiderständen oder mittels potentialfreier Stromtransformatoren wie beispielsweise LEM-Wandler (LEM eingetragene Marke). Dieser Strom entspricht einem Strom I_{A}.

Die Teil-Eingangsspannungen U_{EI}, U_{EII}, liegen nach der erfindungsgemäßen Topologie 50 % niedriger, d. h. bei einer Eingangsspannung U_{E} im Bereich von 450 bis 1500 V, liegt U_{EI}, U_{EII} im Bereich von 225 bis 750 V. Somit können sehr schnelle und auch kostengünstige Halbleiter mit einer Maximalspannung im Bereich von 1200 V eingesetzt werden.

Des Weiteren steht am Ausgang eine "anfassbare" Ausgangsspannung von beispielsweise U_{A} = 660 V zur Verfügung, wobei bei zeitsynchroner (gleichzeitig/zeitversetzt) Ansteuerung das gemeinsame Potential P auf halber Eingangsspannung bzw. Ausgangsspannung U_{A} symmetriert ist.

Alternativ zu der in der Fig. 1 dargestellten Ausfhhrungsform kann als Eingangsspannung auch eine pulsierende Wechselspannung, wie sie in 1000 V/16 1/3 Hz- und 1500 V/50 Hz-Netzen der Bahntechnik üblich sind, verwendet werden, wobei der Gleichspannungswandler SW mit einem PFC-Regelkreis angesteuert werden kann, wie dieser beispielsweise in der DE 195 05 417 A1 beschrieben ist.

Bei der oben beschriebenen Schaltungsanordnung ist es unwesentlich, ob die zur Verfügung gestellte Eingangsspannung eine DC-Spannung oder eine AC-Spannung mit vorzugsweise 16,3 /50/60 oder 400 Hz Sinus-Spannung, Trapez- oder Rechteck-Spannung ist.

Die Steuer-Regeleinheit (SRE) liegt auf Potential P und ist zur Messung der Ausgangsspannung mit PUA und MUA verbunden. Zur Steuerung der tₒₙ-Zeit wird die Eingangsspannung PUE, PUM gemessen. Ferner sind Anschlüsse für die Strommessung I_{AI}, I_{AII}, über die Shuntspannungen vorgesehen.

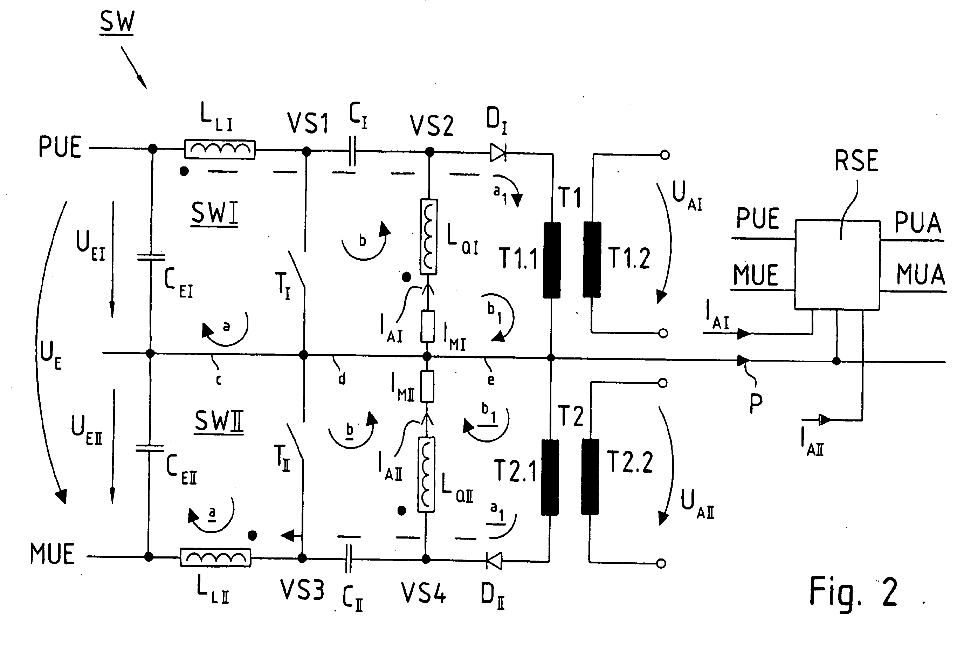

Fig. 2 zeigt eine weitere Ausführungsform des Doppel-Sepic-Wandlers mit PotentialTrennung, wobei die Ausgangskondensatoren C_{AI}, C_{AII} jeweils durch eine Primärspule T1.1, T2.1 eines Trenntransformators T1, T2 ersetzt werden. Dabei liegt jeweils an einer Sekundärspule T1.2, T2.2 die Teilausgangsspannung U_{AI} bzw. U_{AII} an. Ausgangsseitig können die Sekundärspulen T1.2, T2.2 je nach Spannungs- bzw. Strombedarf in Reihe oder parallel geschaltet werden, wodurch eine Symmetrierung der Leistungsstufen SWI und SWII erfolgt.

## Patentansprüche

1. Spannungswandler (SW), umfassend zumindest eine erste und eine zweite Wandlerstufe (SW I, SW II) mit jeweils einem Eingang, wobei an jedem Eingang eine erste bzw. zweite Teileingangsspannung U_{EI}, U_{EII} anliegt, die in ihrer Summe eine Eingangsspannung U_{E} bilden, und mit jeweils einem ersten bzw. zweiten Ausgang, wobei an dem ersten Ausgang der ersten Wandlerstufe (SW I) bezogen auf ein gemeinsames Potential (P) eine positive Teilausgangsspannung U_{AI} und an dem zweiten Ausgang der zweiten Wandlerstufe (SW II) eine bezogen auf dieses gemeinsame Potential (P) negative Teilausgangsspannung U_{AII} anliegt, wobei die Summe der einzelnen Teilausgangsspannungen U_{AI}, U_{AII} die Ausgangsspannung U_{A} ergibt,
**dadurch gekennzeichnet,**
**dass** die erste und zweite Wandlerstufe (SWI, SWII) eingangsseitig an eine Transientenspannungen (U_{TRANS}) aufweisende und stark schwankende Eingangsspannung U_{E} eines Spannungsnetzes angeschlossen sind, wobei die Eingangsspannung UE kleiner, gleich oder größer als die zu erzeugende Ausgangsspannung UA ist,
**dass** die erste Wandlerstufe (SW I) einen Längszweig mit einer ersten Induktivität (L_{LI}), einen ersten Kondensator (C_{I}) sowie einer ersten Diode (D_{I}) aufweist, wobei eine Eingangsklemme (PUE) mit einem ersten Anschluss der ersten Längs-Induktivität (I_{LI}) und über einen ersten Eingangskondensator (C_{EI}) mit dem gemeinsamen Potential (P) verbunden ist, wobei eine erste Verbindungsstelle (VS1) zwischen der ersten Längs-Induktivität (L_{LI}) und dem ersten Kondensator (C_{I}) über ein erstes Halbleiterschaltelement (T_{I}) mit dem gemeinsamen Potential (P) verbunden ist, eine zweite Verbindungsstelle (VS2) zwischen dem ersten Kondensator (C_{I}) und einer Anode der ersten Diode (D_{I}) über eine erste Quer-Induktivität (L_{QI}) mit dem gemeinsamen Potential (P) verbunden ist und ausgangsseitig eine Kathode der ersten Diode (D_{I}) an einer Ausgangsklemme (PUA) liegt, die über einen ersten Anschlusskondensator (C_{AI}) mit dem gemeinsamen Potential (P) verbunden ist,
**dass** die zweite Wandlerstufe (SW_{II}) einen zweiten Längszweig aufweist, in dem eine zweite Längs-Induktivität (L_{LII}), ein zweiter Kondensator (C_{II}) sowie eine zweite Diode (D_{II}) angeordnet ist und eine Eingangsklemme (MUE) der zweiten Wandlerstufe (SW II) mit einem Anschluss der zweiten Längs-Induktivität (L_{LII}) sowie einem ersten Pol eines zweiten Eingangskondensators (C_{EII}) verbunden ist, dessen zweiter Pol an dem gemeinsamen Potential (P) liegt, eine dritte Verbindungsstelle (VS3) zwischen der zweiten Längs-Induktivität (L_{LII}) und dem zweiten Kondensator (C_{II}) über ein zweites Halbleiterschaltelement (T_{II}) an dem gemeinsamen Potential (P) verbunden ist, eine vierte Verbindungsstelle (VS4) zwischen dem zweiten Kondensator (C_{II}) und einer Kathode der zweiten Diode (D_{II}) über eine zweite Quer-Induktivität (L_{QII}) an dem gemeinsamen Potential (P) verbunden ist, wobei eine Anode der zweiten Diode (D_{II}) mit einem negativen Ausgang (MUA) und einem negativen Pol eines zweiten Ausgangskondensators (C_{AII}) verbunden ist, dessen positiver Pol mit dem gemeinsamen Potential (P) verbunden ist und wobei an dem zweiten Ausgangskondensator (C_{AII}) die Teilausgangsspannung (U_{AII}) anliegt,
**dass** die an der ersten und zweiten Wandlerstufe (SWI, SWII) ausgangsseitig anliegende Ausgangsspannun U_{A} zur Versorgung eines Elektroniksystems geregelt ist und dass die Halbleiterbauelemente (T_{I}, T_{II}, D_{I}, D_{II}) der Einzelzweige eine Spannungsfestigkeit aufweisen, die kleiner ist als die Summe aus Eingangsspannung U_{E} und Ausgangsspannung U_{A} zuzüglich der Transientenspannung U_{TRANS},
und wobei eine Steuer-Regeleinheit (SRE) auf dem gemeinsamen Potential (P) angeschlossen ist, mittels der das eine bzw. zweite Halbleiterschaltelement (T_{I}, T_{II}) zeitsynchron ansteuerbar ist.

2. Spannungswandler nach Anspruch 1,
**dadurch gekennzeichnet,**
**dass** die Induktivitäten (L_{LI}, L_{QI}, L_{LII}, L_{QII}) als Drosselspulen ausgebildet sind, die vorzugsweise einen gemeinsamen Magnetkern aufweisen.

3. Spannungswandler nach Anspruch 1 oder 2,
**dadurch gekennzeichnet,**
**dass** der Spannungswandler (SW) eine Steuer-Regeleinheit (SRE) zur potentialfreien Ansteuerung zumindest des Halbleiterschaltelementes (T_{II}) aufweist.

4. Spannungswandler nach zumindest einem der vorhergehenden Ansprüche,
**dadurch gekennzeichnet,**
**dass** die Halbleiterschaltelemente (T_{I}, T_{II}) als IGBT- oder FET-Transistoren ausgebildet sind.

5. Spannungswandler nach zumindest einem der vorhergehenden Ansprüche,
**dadurch gekennzeichnet,**
**dass** in einem die Querinduktivitäten (L_{QI}, L_{QII}) aufweisendcn Querzweig ein Strommesselement (IM_{I}, IM_{II}) vorzugsweise ein Shuntwiderstand vorgesehen ist, wobei der gemessene Strom dem Ausgangsstrom (I_{AI}, I_{AII}, I_{A}) entspricht.

6. Spannungswandler nach zumindest einem der vorhergehenden Ansprüche,
**dadurch gekennzeichnet,**
**dass** die Steuer-Regeleinheit (SRE) bezogen auf das Potential P mittels Differenzmessverstärkem die Eingangsspannung U_{E} zur tₒₙ-Vorsteuerung misst.

7. Spannungswandler nach zumindest einem der vorhergehenden Ansprüche,
**dadurch gekennzeichnet,**
**dass** die Steuer-Regeleinheit (SRE) bezogen auf das Potential P mittels Differenzmessverstärker die Ausgangsspannung U_{A} als Istgröße misst.

8. Spannungswandler nach zumindest einem der vorhergehenden Ansprüche,
**dadurch gekennzeichnet,**
**dass** durch die Differenzmessung das Potential P nicht unsymmetrisch belastet wird und bei Leerlauf nicht unsymmetrisch zu PUE/MUE wird.

9. Spannungswandler nach zumindest einem der vorhergehenden Ansprüche,
**dadurch gekennzeichnet,**
**dass** durch Addition/Subtraktion der Querzweigströme (I_{AI}, I_{AII}) eine Unsymmetrie der Wandlerstufen (SWI, SWII) feststellbar ist.

10. Spannungswandler nach zumindest einem der vorhergehenden Ansprüche,
**dadurch gekennzeichnet,**
**dass** die einzelnen Wandlerstufen (SWI, SWII) jeweils an ihrem Ausgang einen vorzugsweise stromeingeprägten Trenntransformator (T1, T2) aufweisen.

## Claims

1. Voltage transformer (SW) including at least a first and a second transformer stage (SW I, SW II), each transformer stage having an input, whereby to each input is connected a first component input voltage U_{EI} and a second component input voltage U_{EII}, respectively, which added together form an input voltage U_{E}, and each of the first and second transformer stages having a first and second output, respectively, whereby to the first output of the first transformer stage (SW I), with reference to a common potential (P), there is connected a positive component output voltage U_{AI}, and to the second output of the second transformer stage (SW II), with reference to said common potential (P), there is connected a negative component output voltage U_{AII}, the sum of the single component output voltage U_{AI}, U_{AII} produces said output voltage U_{A},
**characterized in**
**that** the first and second transformer stage (SWI, SWII), at the input side, are connected to an input voltage U_{E} of a voltage net, said input voltage U_{E} having transient voltages (U_{TRANS}) and being heavy oscillating, whereby the input voltage UE is less, equal or higher than the output voltage UA to be generated,
**that** the first transformer stage (SW I) comprises a series arm with a first inductivity (L_{LI}), a first capacitor (C_{I}) and a first diode (D_{I}), whereby an input terminal (PUE) is connected to a first connection of the first series inductance (L_{LI}) and by way of a first input capacitor (C_{EI}) with the common potential (P), whereby a first junction (VS1) between the first series inductance (L_{LI}) and the first capacitor (C₁) is connected by way of a first semiconductor switching device (T₁) with the common potential (P), a second junction (VS2) between the first capacitor (C₁) and an anode of the first diode (D₁) is connected by way of a first shunt inductance (L_{Q1}) with the common potential (P) and on the output side, a cathode of the first diode (D₁) is connected to an output terminal (PUA) which by way of a first connecting capacitor (C_{AI}) is connected with common potential (P),
**that** the second transformer stage (VT_{II}) comprises a second series arm, in which a second series inductance (L_{LII}), a second capacitor (C_{II}) and a second diode (D_{II}) are arranged and an input terminal (MUE) of the second transformer stage (SW II) is connected with a connection of the second series inductance (L_{LII}) as well as with a first pole of a second input capacitor (C_{EII}), whose second pole is connected to the common potential (P), a third junction (VS3) between the second series inductance (L_{LII}) and the second capacitor (C_{II}) is connected to the common potential (P) by way of a second semiconductor switching device (T_{II}), a fourth junction (VS4) between the second capacitor (C_{II}) and a cathode of the second diode (D_{II}) is connected to the common potential (P) by way of a second shunt inductance (L_{QII}), whereby an anode of the second diode (D_{II}) is connected with a negative output (MUA) and a negative pole of a second output capacitor (CA_{II}), whose positive pole is connected with the common potential (P), and whereby the component output voltage (UA_{II}) is connected to the second output capacitor (C_{AII}),
**that** the output voltage U_{A} being connected at the output side to the first and second transformer stage (SWI, SWII) is regulated for supplying an electronic system and that the semiconductor components (T_{I}, T_{II}, D_{I}, D_{II}) of the single arms have a voltage strength being less than the sum of input voltage U_{E} and output voltage U_{A} plus the transient voltage U_{TRANS},
and whereby a control unit (CU) is connected on the common potential (P), by means of which the one or the second semiconductor switching device (T_{I}, T_{II}) is controllable synchronously.

2. Voltage transformer according to claim 1,
**characterized in**
**that** the inductivities (L_{LI}, L_{QI}, L_{LII}, L_{QII}) are designed as choking coils preferably having a common magnetic core.

3. Voltage transformer according to claim 1 or 2,
**characterized in**
**that** the voltage transformer (SW) comprises a control unit (SRE) for potential-free control of at least the semiconductor circuit element (T_{II}).

4. Voltage transformer according to at least one of the preceding claims,
**characterized in**
**that** the semiconductor circuit elements (T_{I}, T_{II}) are designed as IGBT- or FET-transistors.

5. Voltage transformer according to at least one of the preceding claims,
**characterized in**
**that** in a shunt arm having the series inductances (L_{QI}, L_{QII}) a current measurement device (IM_{I}, IM_{II}), preferably a shunt resistor, is provided, whereby the measured current corresponds to the output current (I_{AI}, I_{AII}, I_{A}).

6. Voltage transformer according to at least one of the preceding claims,
**characterized in**
**that** the control unit (SRE) related to the potential (P) measures the input voltage U_{E} to the tₒₙ pilot control by means of differential operational amplifiers.

7. Voltage transformer according to at least one of the preceding claims,
**characterized in**
**that** the control unit (SRE) related to the potential P measures the output voltage U_{A} in terms of actual size by means of differential operational amplifiers.

8. Voltage transformer according to at least one of the preceding claims,
**characterized in**
**that** as a result of the differential measurement, the potential P is not unsymmetrically loaded and in open-circuit operation does not unsymmetrically become PUE/MUE.

9. Voltage transformer according to at least one of the preceding claims,
**characterized in**
**that** by means of addition/subtraction of the shunt arm currents (I_{AI}, I_{AII}), an asymmetry in the transformer stages (SWI, SWII) is ascertainable.

10. Voltage transformer according to at least one of the preceding claims,
**characterized in**
**that** the single transformer stages (SWI, SWII) each comprise at their output a preferably current impressed isolation transformer (T1, T2).

## Revendications

1. Transformateur de tension (SW), comprenant au moins un premier et un deuxième étages de transformateur (SW I, SW II) ayant chacun une entrée, sachant qu'à chaque entrée est appliquée une première et une deuxième tensions d'entrée partielles U_{EI}, U_{EII}, dont la somme forme une tension d'entrée U_{E}, et avec une première et une deuxième sorties, sachant qu'à la première sortie du premier étage de transformateur (SW I) est appliquée une tension de sortie partielle positive U_{AI} par rapport à un potentiel commun (P), et qu'à la deuxième sortie du deuxième étage de transformateur (SW II) est appliquée une tension de sortie partielle négative U_{AII} par rapport à ce potentiel commun (P), la somme des tensions de sortie partielles respectives U_{AI}, U_{AII} constituant la tension de sortie U_{A},
**caractérisé en ce**
**que** du côté de l'entrée, le premier et le deuxième étages de transformateur (SW I, SW II) sont connectés à une tension d'entrée U_{E} présentant des tensions transitoires (U_{TRANS}) et fortement fluctuante d'un réseau de tension destiné, la tension d'entrée U_{E} étant inférieure, égale ou supérieure à la tension de sortie U_{A} à générer,
**que** le premier étage de transformateur (SW 1) présente une branche longitudinale avec une première inductance (L_{LI}), un premier condensateur (C_{I}) ainsi qu'une première diode (D_{I}), sachant qu'une borne d'entrée (PUE) est reliée à un premier contact de la première inductance longitudinale (L_{LI}) et par un premier condensateur d'entrée (C_{EI}) au potentiel commun (P), sachant qu'un premier point de jonction (VS1) entre la première inductance longitudinale (L_{LI}) et le premier condensateur (C_{I}) est relié au potentiel commun (P) par un premier élément de connexion à semi-conducteurs (T_{I}), qu'un deuxième point de jonction (VS2) entre le premier condensateur (C_{I}) et une anode de la première diode (D_{I}) est relié au potentiel commun (P) par une première inductance transversale (L_{QI}), et que du côté de la sortie, une cathode de la première diode (D_{I}) est placée sur une borne de sortie (PUA) et est reliée au potentiel commun (P) par un premier condensateur de raccordement (C_{AI}),
**que** le deuxième étage de transformateur (SW II) présente une deuxième branche longitudinale dans laquelle se trouvent une deuxième inductance longitudinale (L_{LII}), un deuxième condensateur (C_{II}) ainsi qu'une deuxième diode (D_{II}), et une borne d'entrée (MUE) du deuxième étage de transformateur (SW II) est reliée à un contact de la deuxième inductance longitudinale (L_{LII}) ainsi qu'à un premier pôle d'un deuxième condensateur d'entrée (C_{EII}) dont le second pôle est appliqué au potentiel commun (P), un troisième point de jonction (VS3) entre la deuxième inductance longitudinale (L_{LII}) et le deuxième condensateur (C_{II}) est relié au potentiel commun (P) par un deuxième élément de connexion à semi-conducteurs (T_{II}), un quatrième point de jonction (VS4) entre le deuxième condensateur (C_{II}) et une cathode de la deuxième diode (D_{II}) est reliée au potentiel commun (P) par une deuxième inductance transversale (L_{QII}), sachant qu'une anode de la deuxième diode (D_{II}) est reliée à une sortie négative (MUA) et à un pôle négatif d'un deuxième condensateur de sortie (C_{AII}) dont le pôle positif est relié au potentiel commun (P), et que la tension de sortie partielle (U_{AII}) est appliquée au deuxième condensateur de sortie (C_{AII}),
**que** la tension de sortie U_{A} destinée à alimenter un système électronique et appliquée du côté de la sortie au premier et au deuxième étages de transformateur (SW I, SW II) est régulée, et que les composants à semi-conducteurs (T_{I}, T_{II}, D_{I}, D_{II}) des différentes branches présentent un rigidité diélectrique inférieure à la somme de la tension d'entrée U_{E} et de la tension de sortie U_{A} augmentée de la tension transitoire U_{TRANS},
sachant qu'une unité de commande et de régulation (SRE) est connectée sur le potentiel commun (P), au moyen de laquelle le ou les élément(s) de connexion à semi-conducteurs (T_{I}, T_{II}) peut/peuvent être commandé(s) en synchronisme.

2. Transformateur de tension selon la revendication 1,
**caractérisé en ce**
**que** les inductances (L_{LI}, L_{QI}, L_{LII}, L_{QII}) sont réalisées sous forme de bobines d'arrêt qui présentent de préférence un noyau aimanté commun.

3. Transformateur de tension selon la revendication 1 ou 2,
**caractérisé en ce**
**que** le transformateur de tension (SW) présente une unité de commande et de régulation (SRE) pour la commande sans potentiel d'au moins l'élément de connexion à semi-conducteurs (T_{II}).

4. Transformateur de tension selon au moins l'une des revendications précédentes,
**caractérisé en ce**
**que** les éléments de connexion à semi-conducteurs (T_{I}, T_{II}) sont réalisés sous forme de transistors IGBT ou FET.

5. Transformateur de tension selon au moins l'une des revendications précédentes,
**caractérisé en ce**
**que**, dans une branche transversale présentant les inductances transversales (L_{QI}, L_{QII}), est prévu un élément de mesure du courant (IM_{I}, IM_{II}), de préférence une résistance en dérivation, le courant mesuré correspondant au courant de sortie (I_{AI}, I_{AII}, I_{A}).

6. Transformateur de tension selon au moins l'une des revendications précédentes,
**caractérisé en ce**
**que** l'unité de commande et de régulation (SRE) mesure au moyen d'amplificateurs différentiels la tension d'entrée U_{E} à la commande pilote tₒₙ par rapport au potentiel P.

7. Transformateur de tension selon au moins l'une des revendications précédentes,
**caractérisé en ce**
**que** l'unité de commande et de régulation (SRE) mesure comme grandeur réelle la tension de sortie U_{A} par rapport au potentiel P au moyen d'amplificateurs différentiels.

8. Transformateur de tension selon au moins l'une des revendications précédentes,
**caractérisé en ce**
**que** par la mesure différentielle, le potentiel P n'est pas chargé de manière asymétrique et qu'en marche à vide, ne devient pas asymétrique par rapport à PUE/MUE.

9. Transformateur de tension selon au moins l'une des revendications précédentes,
**caractérisé en ce**
**qu'**avec l'addition/soustraction des courants des branches transversales (I_{AI}, I_{AII}), une asymétrie des étages de transformateur (SWI, SWII) peut être constatée.

10. Transformateur de tension selon au moins l'une des revendications précédentes,
**caractérisé en ce**
**que** chaque étage de transformateur (SWI, SWII) présente à sa sortie un transformateur de séparation (T1, T2), de préférence à courant imprimé.
